# EUROPÄISCHE PATENTSCHRIFT

(11) **EP 1 094 620 B1**
(45) Veröffentlichungstag und Bekanntmachung des Hinweises auf die Patenterteilung: **20.04.2005**
(21) Anmeldenummer: 00120529.3
(22) Anmeldetag: 20.09.2000
(51) Int. Cl.: H04B 7/26, H04B 5/00

(54) **Kommunikationssystem für Gebiet mit eingeschränkten Empfangsmöglichkeiten**
Communication system for area with restricted reception capacities
Système de communication pour zone aux capacités de réception restrintes

(30) Priorität: 22.10.1999 DE 19950882
(43) Veröffentlichungstag der Anmeldung: 25.04.2001
(73) Patentinhaber: Ascom Systec AG, 5506 Mägenwil (CH)
(72) Erfinder: Yenerim, Savas, 14055 Berlin (DE)
(74) Vertreter: Roshardt, Werner Alfred, Dipl.-Phys.

(56) Entgegenhaltungen:
- EP-A- 0 465 457
- EP-A- 0 584 581
- EP-A- 0 913 956
- DE-A- 2 728 765

## Beschreibung

Die Erfindung bezieht sich auf ein redundantes Kommunikationsnetz für Gebiete mit eingeschränkten Empfangsmöglichkeiten, wie z.B. in Tunneln und in Gebäuden, und insbesondere auf die kostengünstige breitbandige Tunnel- und In-house-Versorgung mit Funk- und Verteildiensten.

Systeme für die Versorgung von Tunneln sind bekannt. Die EP 0 465 457 A2 (Kapsch) beschreibt eine Vorrichtung zum bidirektionalen Versorgen eines Tunnels, einer Unterführung oder dergleichen mit Mobilfunksignalen. Dazu wird ausserhalb des zu versorgenden Gebiets ein Freiraum-Scannerempfänger angeordnet, welcher die Frequenzkanäle des Mobilfunksystems abtastet. Diesem nachgeschaltet ist ein Tunnelsender, welcher die benutzten Frequenzkanäle mittels eines Strahlerkabels in den Tunnel abstrahlt sowie ein Tunnel-Scannerempfänger, welcher im Tunnel die Kanäle des Mobilfunksystems abtastet und die aktiven Kanäle zu einem Freiraumsender weiterleitet.

Dieses System ist nur für kurze Tunnel geeignet. Deshalb werden Kommunikationsnetze mit einer Kopfstation und mehreren Repeatern zur Versorgung von unversorgten Gebieten mit Funkdiensten wie z.B. in Tunneln oder in Gebäuden (In-house-Versorgung) eingesetzt. Die Funkdienste werden in einer Kopfstation empfangen und aufbereitet, die z.B. an einem Tunnelende installiert ist. Anschliessend werden sie über einen Lichtwellenleiter (LWL) zu den jeweiligen Tunnelrepeatern geleitet, wo sie dann über sogenannte Leckkabel abgestrahlt werden. Umgekehrt werden in einem Tunnel über das Leckkabel empfangene Signale nach der Aufbereitung im Tunnelrepeater über LWL zu einer Kopfstation geführt und dort für die Weitergabe nach aussen aufbereitet.

Derartige Systeme sind beispielsweise aus der EP 0 584 581 A1 (Bosch) bekannt. Diese betrifft ein Breitband-Tunnelfunksystem mit einer Kopfstation und mehreren damit über Lichtwellenleiter verbundenen Verstärkerstellen. Die Signale werden über an die Verstärkerstellen angeschlossene Leckkabel in den Tunnelraum ausgesandt und von dort empfangen. Damit nicht aufwändige breitbandige Übertragungsmittel eingesetzt werden müssen, werden die Frequenzen in der Kopfstation auf eng benachbarte Zwischenfrequenzen umgesetzt. Die Zwischenfrequenzsignale werden optisch zu den Verstärkerstellen übertragen, dort in elektrische Signale und zurück in das ursprüngliche Frequenzband umgesetzt und über einen Duplexer auf das Leckkabel geführt. Von einer mobilen Station abgegebene Signale gelangen über das Leckkabel wiederum zum Duplexer, von dort aus über einen Bandselektor an einen elektrisch-optischen Koppler und schliesslich wiederum optisch zur Kopfstation.

Auch die EP 0 913 956 A1 (Telediffusion de France) betrifft ein derartiges System zur Verteilung von Funksignalen über Leckkabel in abgeschlossenen Gebieten wie Tunneln oder Tiefgaragen, wobei gleichzeitig Signale zwischen 30 und 470 MHz und Mobilfunk-Signale von ca. 900 MHz eingesetzt werden. Das zu versorgende Gebiet ist in mehrere Leckkabel-Abschnitte unterteilt, wobei jeweils zwischen den Enden der einzelnen Leckkabel Repeater angeordnet sind, welche gleichzeitig die ersten Signale unidirektional und die zweiten Signale bidirektional verstärken können. Die ersten Signale werden von einer ersten Kopfstation am ersten Ende der zu versorgenden Strecke in das erste Leckkabel eingespiesen, über das Leckkabel abgestrahlt und jeweils von den Repeatern verstärkt. Die zweiten Signale werden von einer zweiten Kopfstation direkt zu allen Repeatern geleitet, durch welche die angrenzenden Leckkabel versorgt werden.

Schliesslich betrifft auch die DE 27 28 765 A1 eine Tunnel-Funkanlage, wobei Funkverbindungen zwischen der Anlage und mobilen Funkgeräten über Leckkabel hergestellt werden. Um einen unbeeinträchtigten unabhängigen Betrieb benachbarter Kanäle zu ermöglichen, werden für Sender und Empfänger getrennte Leckkabel verwendet.

Nachteil beim Stand der Technik ist es, dass ein derartiges System störanfällig ist und sehr leicht der Fall eintreten kann, dass aufgrund einer Störung bei einem der Repeater in dem System das gesamte System oder Teilabschnitte des Systems ausfallen. Daher werden redundante Systeme eingesetzt, in denen wenigstens einige der Teileinheiten mehrfach vorgesehen sind, um einen Gesamtausfall des Systems bei Ausfall einer einzigen Einheit zu vermeiden. Ein solcher Aufbau ist aber teuer, insbesondere wenn die einzelnen Repeater Sende- und Empfangsaufgaben erfüllen müssen.

Die der Erfindung zugrundeliegende Aufgabe besteht darin, ein Kommunikationssystem zur Versorgung von lokal begrenzten unterversorgten Gebieten zu schaffen, das kostengünstig zu implementieren ist.

Diese Aufgabe wird gelöst durch ein System mit den Merkmalen nach Anspruch 1. Bevorzugte Ausführungsformen der Erfindung sind Gegenstand der Unteransprüche.

Erfindungsgemäss wird jede Repeatereinheit nur als Sender- oder Empfängereinheit für die Funkdienstsignale ausgelegt, und nicht wie beim Stand der Technik als kombinierte Sendeempfangsstation.

Damit sind die einzelnen Repeater einfacher und kostengünstiger herzustellen, was die Gesamtkosten des Kommunikationsnetzes wesentlich reduziert. Das erfindungsgemässe Kommunikationssystem zur Versorgung eines Gebietes mit eingeschränkten Empfangsmöglichkeiten mit Funkdiensten mit wenigstens einer Kopfeinheit, die an einem Randpunkt des Gebietes angeordnet ist, mehreren Repeatereinheiten in dem Gebiet zum Senden / Empfangen von Funkdienstsignalen, die untereinander und mit der Kopfeinheit über jeweils wenigstens eine Leitung verbunden sind, ist also dadurch gekennzeichnet, dass jede der mehreren Repeatereinheiten entweder eine Sendereinheit oder eine Empfängereinheit für die Funkdienstsignale umfasst und die Repeatereinheiten so angeordnet sind, dass entlang einer Strecke in dem Gebiet Sendereinheiten und Empfängereinheiten alternierend aufeinander folgen.

Vorzugsweise sind die mehreren Repeatereinheiten untereinander und mit der wenigstens einen Kopfeinheit zusätzlich über eine zweite Leitung und einen zweiten Koppler verbunden. In einer besonders bevorzugten Ausführungsform wird als zweite Leitung eine Glasfaser verwendet.

In einer weiteren bevorzugten Ausführungsform ist die Kopfeinheit an beiden Tunnelmündern doppelt ausgeführt, so dass beim Ausfall einer Kopfstation die Funktion von der anderen Einheit übernommen werden kann. Damit wird die Ausfallsicherheit des Kommunikationssystems wesentlich verbessert.

Besondere Vorzüge der Erfindung bestehen darin, dass sich gegenüber dem Stand der Technik die Zahl der benötigten Sender- und Empfängereinheiten bei gleichbleibend hoher oder sogar verbesserter Ausfallsicherheit (bei einem Leckkabelbruch bleibt die Funkversorgung des Tunnels erhalten) reduziert wird. Eine weitere Kostenreduktion wird durch Wegfallen des komplexen und teuren Koppelnetzwerkes erzielt.

Weitere Vorteile und Merkmale der Erfindung ergeben sich aus der folgenden Beschreibung eines bevorzugten Ausführungsbeispiels, wobei Bezug genommen wird auf die beigefügten Zeichnungen.
Fig. 1 zeigt die Anordnung von Sender- und Empfängereinheiten in einem Tunnel gemäß der Erfindung.
Fig. 2 zeigt die Anordnung von Sender- und Empfängereinheiten in einem Tunnel nach dem Stand der Technik.
Fig. 3 zeigt Einzelheiten der mehreren erfindungsgemäß miteinander verbundenen Sender- und Empfängereinheiten.

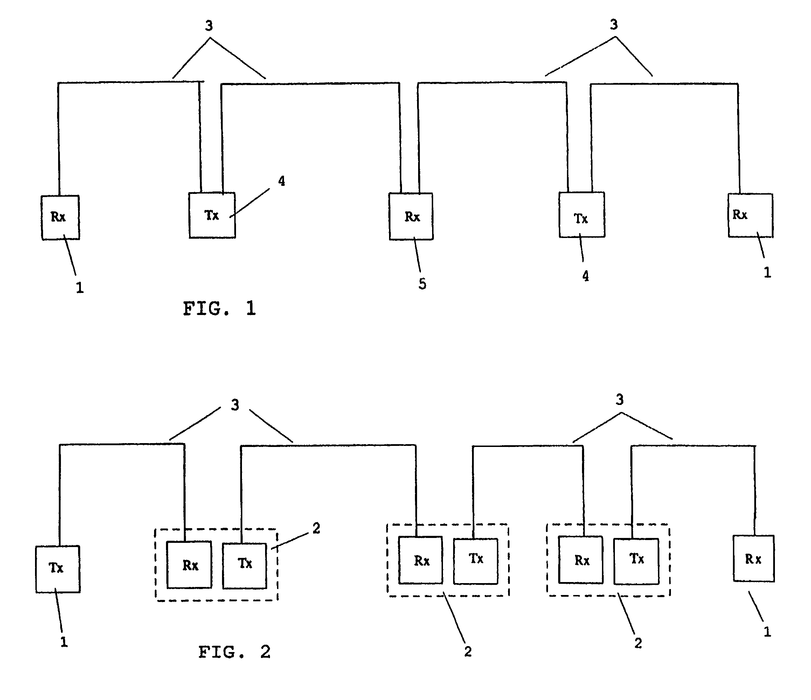

In Fig. 1 ist eine erfindungsgemäße Anordnung von zwei Sendereinheiten 4 und einer Empfängereinheit 5 gezeigt. Die Einheiten 4 und 5 bilden eine Kette, beispielsweise in einem Tunnel, an deren beiden Enden jeweils eine Kopfeinheit 1 angeordnet ist. Im weiteren wird angenommen, daß der Tunnel ein Länge von 2400 m hat, so daß zwischen den einzelnen Einheiten ein Abstand von 800 m eingehalten wird. Die Einheiten sind untereinander über ein sog. Leckkabel 3 verbunden, das neben der Übertragung von Signalen zwischen den Einheiten dazu dient, daß Signale von dem Leckkabel abgestrahlt werden und somit zur Funkversorgung des Tunnels bzw. des Gebietes mit eingeschränkten Empfangsmöglichkeiten beiträgt.

Die erfindungsgemäße Anordnung von Sender- und Empfängereinheiten 4 und 5 unterscheidet sich dadurch von einer Anordnung von Repeatereinheiten 2 nach dem Stand der Technik, wie sie in Fig. 2 gezeigt ist, daß beim Stand der Technik jeweils eine Repeatereinheit 2 sowohl einen Sender als auch einen Empfänger aufweist. Die Repeater 2 sind durch gestrichelte Rechtecke dargestellt, in denen die eigentlichen Sende- und Empfangseinrichtungen Tx bzw. Rx mit durchgezogenen Linien dargestellt sind. Die einzelnen Repeater 2 sind über ein Leckkabel 3 miteinander verbunden.

Um ein Gebiet mit eingeschränkten Empfangsmöglichkeiten versorgen zu können, weisen Kommunikationssysteme nach dem Stand der Technik wenigstens eine Kopfeinheit 1 auf, die an einem Randpunkt des Gebietes angeordnet ist. Über sie wird der Funkdienst in das Gebiet / den Tunnel "eingespeist", wobei er über die Repeater 2 innerhalb des Gebietes verteilt wird. Die Kopfeinheit 1 befindet sich also beim Stand der Technik an einem Ende der Kette von Repeatern 2. (Selbstverständlich kann die Einspeisung auch in der Mitte der Kette bzw. an dem gemeinsamen Ende zweier Ketten erfolgen.)

Ein solches Kommunikationssystem zur Versorgung von lokal begrenzten unterversorgten Gebieten nach dem Stand der Technik ist jedoch sehr teuer in der Implementierung, da für jeden Repeater 2 eine Sendereinrichtung und eine Empfängereinrichtung vorgesehen werden muß. Ferner ist das Kommunikationssystem nach dem Stand der Technik in hohem Maße störanfällig: wenn ein Kabelbruch innerhalb des zu versorgenden Gebietes auftritt, wird die Kette aus den Repeatern unterbrochen, so daß eine lückenlose Versorgung des Gebietes nicht mehr gewährleistet ist.

Erfindungsgemäß wird ein Kommunikationssystem geschaffen, bei dem jede der mehreren Repeatereinheiten 2 im wesentlichen entweder aus einer Sendereinheit 4 oder einer Empfängereinheit 5 besteht. Mit anderen Worten, in dem erfindungsgemäßen Kommunikationsnetz unterscheiden sich die Tunnelrepeater von den konventionellen Repeatern dadurch, daß sie nicht aus einer Kombination aus Sender und Empfänger, sondern entweder aus einer Sendereinheit oder aus einer Empfangseinheit bestehen. Die jeweiligen Empfänger- und Sendereinheiten sind über strahlende Leckkabel-Abschnitte miteinander verbunden, wobei die Empfangs- und Sendereinheiten entlang des Tunnels abwechselnd (alternierend) angeordnet sind.

Die Sendereinheit in einem Tunnel besteht im Prinzip aus einem optischen Schalter, dessen Funktion unten erläutert wird, aus einem optischen Empfänger, einem Breitbandverstärker und einem 3 dB-Koppler, an dessen Ausgängen zwei Leckkabel-Abschnitte angeschlossen sind. Die beiden Enden der jeweiligen Leckkabel-Teilabschnitte sind mit den entsprechenden Empfangseinheiten im Tunnel verbunden.

Die Empfängereinheiten im Tunnel bestehen aus einem Stern-Koppler, aus einem rauscharmen linearen Breitband- Verteilerverstärker, diversen bereichsselektiven, summensignalgeregelten Eintaktverstärkern, einem breitbandigen Treiberverstärker und schließlich einem optischen Sender mit zweifachem optischen Ausgang.

Die Signale des Funkdienstes, mit dem das Gebiet versorgt werden soll bzw. die aus dem Gebiet aufgefangen werden sollen und nach "außen" weitergeleitet werden sollen, laufen über ein Leckkabel 3, das durch die einzelnen Sender- und Empfängereinheiten 4 und 5 wie weiter unten erläutert durchgeschleift wird. Innerhalb des zu versorgenden Gebietes sind die Einheiten so angeordnet, daß entlang einer Strecke in dem Gebiet die Sendereinheiten 4 und die Empfängereinheiten 5 alternierend aufeinander folgen, wie es in Fig. 1 dargestellt ist.

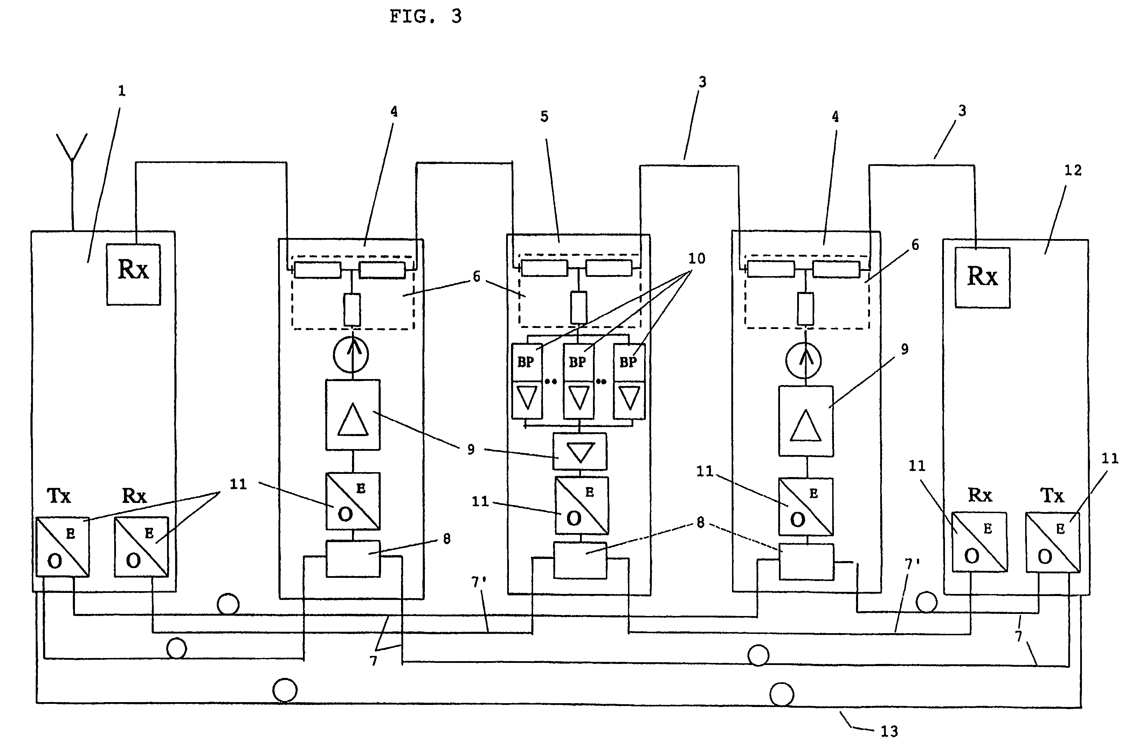

Die Einzelheiten der Einheiten und ihrer Verbindung untereinander und mit der Kopfeinheit 1 ist in Fig. 3 gezeigt.

Wie bereits erläutert sind die mehreren Repeatereinheiten 2 untereinander und mit der wenigstens einen Kopfeinheit 1 über die erste Leitung 3 verbunden, wobei die erste Leitung durch die Repeatereinheiten 2 durchgeschleift wird und zu den folgenden Einheiten fortgesetzt wird. Dazu weist jede der Repeatereinheiten 2, ob Sendereinheit 4 oder Empfängereinheit 5 einen ersten Koppler 6 auf, der insbesondere ein 3 bzw. 6 dB-Koppler ist. Über diesen 3 bzw. 6 dB-Koppler 6 wird ein aufgefangenes Signal von der Leckleitung 3 in die Empfängereinheit 5 eingekoppelt bzw. ein Signal von der Sendereinheit 4 in das Leckkabel 3 eingespeist. Mit der abwechselnden Folge von Sendereinheit 4 und Empfängereinheit 5 in dem Tunnel ist die optimale Versorgung des Gebietes sichergestellt, wobei weniger und einfacher aufgebaute Einheiten benötigt werden als beim Stand der Technik. Dieser Vorteil wird nur wenig dadurch relativiert, daß die Leistung bzw. Empfindlichkeit der einzelnen Einheiten etwas höher sein muß als bei vergleichbaren Anordnungen mit Repeatern 2 nach dem Stand der Technik.

Um die einzelnen Repeater 2 mit den erforderlichen Signalen zu versorgen bzw. von diesen die entsprechenden Signale abzurufen, ist wie in Fig. 3 gezeigt jeder der Repeater 2 außer über die erste Leitung 3 über eine zweite Leitung 7 und einen zweiten Koppler 8 miteinander und mit der mindestens einen Kopfeinheit 1 verbunden. Die Verbindung der einzelnen Repeater mit der Kopfstation bzw. untereinander erfolgt dabei sternförmig: die Sendereinheiten 4 sind alle über eine zweite Leitung 7 untereinander und mit der oder den Kopfstationen 1 verbunden; die Empfängereinheiten 5 sind alle über eine zweite Leitung 7' untereinander und mit der oder den Kopfstationen 1 verbunden.

In der bevorzugten Ausführungsform nach Fig. 3 ist die zweite Leitung 7, 7' eine Glasfaser und der zweite Koppler 8 ein optischer Koppler bzw. Schalter. In der Sendereinheit 4 wird das über die Glasfaser 7 übertragene Signal von dem Koppler 8 in einen elektro-optischen Wandler 11 eingespeist, der aus der optischen Information elektrische Signale erzeugt. Diese werden in einem Breitbandverstärker 9 verstärkt und über den 3 bzw. 6 dB-Koppler 6 in das Leckkabel 3 eingespeist. Umgekehrt wird bei der Empfängereinheit 5 ein über das Leckkabel 3 aufgefangenes Signal über den 3 bzw. 6 dB-Koppler in mehreren Eintaktverstärker 10 aufbereitet, in einem Breitbandverstärker 9 verstärkt und in einem elektro-optischen Wandler 11 in optische Signale gewandelt, die über einen Koppler 8 in die Glasfaser 7' eingekoppelt werden.

Um die Ausfallsicherheit des Systems zu erhöhen, wird vorzugsweise eine zweite Kopfeinheit 12 an dem der ersten Kopfeinheit 1 gegenüberliegenden Ende der Strecke mit mehreren Repeater einheiten 2 vorgesehen. Damit wird das Gebiet von zwei Seiten versorgt, und bei einem Kabelbruch des Leckkabels 3 werden weiterhin Signale an jede der Einheiten hinter dem Kabelbruch geleitet bzw. von jeder Einheit hinter dem Kabelbruch abgerufen, so daß die Funktion des Systems insgesamt nicht beeinträchtigt wird. In Fig. 3 ist daher an beiden Enden der Strecke eine Kopfeinheit 1 dargestellt.

Bei dieser Ausführungsform mit zwei Kopfeinheiten 1 erfolgt die Versorgung der Tunneleinheiten mittels optischer Schalter, die in den zweiten Kopplern 8 integriert sind. Diese Schalter werden automatisch gesteuert. Beim Fehlen eines von der Kopfstation eingespeisten Pilotsignals oder der optischen Leistung können diese Schalter automatisch auf die jeweils redundante Kopfstation umgeschaltet werden. Die Umschaltung erfolgt auch bei einer Unterbrechung des LWL- Versorgungskabels, beispielsweise bei einem Bruch des Kabels. Der optische Sender ist mit einem optischen Verteiler versehen, so daß die vom Leckkabel empfangenen Signale gleichzeitig zu den beiden Kopfstationen geleitet werden.

Darüber hinaus werden bevorzugt die beiden Kopfeinheiten 1 und 12 über eine Direktleitung 13 miteinander verbunden. Damit ist es möglich, daß nur eine der Kopfeinheiten 1 mit einem Empfänger für die Funkversorgung versehen sein muß. In Fig. 3 ist die links dargestellte Kopfeinheit 1 mit eine (nicht dargestellten) Empfänger und mit einer Antenne 14 für Funksignale versehen. Die zweite Kopfeinheit 12, rechts in Fig. 3, ist in der dargestellten Ausführungsform ausschließlich für den Empfang von Signalen über die Direktleitung 13 ausgelegt.

Die Direktleitung zwischen den beiden Kopfstationen kann eine Leitung eines Telefonnetzes oder eine LWL- oder Koaxialkabel-Verbindung sein, über die auch eine Verbindung zu einer Zentrale hergestellt sein kann.

Das Netz gemäß der vorliegenden Erfindung weist damit die im folgenden zusammengefaßten Vorteile auf:
1) Die Zahl der erforderlichen Sender- und Empfängereinheiten reduziert sich: Beim Stand der Technik nach Fig. 2 werden zur Versorgung eines Tunnels mittlerer Länge von 2400 m in einem Netz mit Segment-Struktur insgesamt 4 Sendereinrichtungen und 4 Empfängereinrichtungen benötigt; bei der erfindungsgemäßen Anordnung kommt man dagegen mit 2 Sendern und 3 Empfängern aus.
2) Bei einem Leckkabelbruch bleibt die Funkversorgung des Tunnels voll erhalten und wird nicht wie bei Netzen mit Segment-Struktur unterbrochen.
3) Komplexe und teure Koppelnetzwerke, die bei einem Netz mit T-Struktur zur Trennung des Empfangssignals von dem Sendesignal notwendig sind, werden nicht benötigt, so daß sich auch gegenüber einem T-Struktur-Netz eine deutliche Kosteneinsparung ergibt.
4) Gegenüber Kommunikationsnetzen mit T-Struktur ist bei der erfindungsgemäßen Anordnung die Übertragung der Simplexsignale mit geringen Maßnahmen in Breitbandtechnik kostengünstig möglich.
5) Die Sendereinheiten sind breitbandig ausgeführt, d.h. alle Signale werden gemeinsam mit Hilfe eines linearen Breitbandverstärkers verstärkt. Durch Wegfall eines Koppelnetzwerkes mit hoher Dämpfung wird der gemeinsame Verstärker nicht so hoch ausgesteuert, so daß dieser kostengünstiger gestaltet werden kann. Zur Erzielung eines besseren Redundanz kann der entkoppelte 3 dB-Breitbandkoppler durch einen 6 dB-Sternkoppler ersetzt werden.
6) Die Sendereinheit wird nicht modular sondern kompakt aufgebaut, wodurch sich weitere Kosten einsparen lassen.
7) Die Empfängereinheit wird ebenfalls kompakt aufgebaut. Auch hier werden keine aufwendige und teure Koppelnetzwerke benötigt, die Signale werden gemeinsam mit einem sehr rauscharmen und linearen Verstärker verstärkt und anschließend auf die Eingänge der jeweiligen bereichsselektiven Regelverstärkern geführt, die zur weiteren Kosteneinsparung in Eintakt-Technik ausgeführt werden können. Die Selektion der Frequenzbereiche können durch einfache und kostengünstige geräteinterne Filterung durchgeführt werden.
8) Die Versorgung der Sende- und Empfangseinheiten mit Funksignalen sind im Falle eines LWL-Kabelbruchs dadurch gesichert, daß die Signale automatisch aus der redundanten Kopfstation aus in die Anlage eingespeist werden.

### Bezugszeichen

- 1: Kopfstation
- 2: Repeatereinheit mit Sender- und Empfängerabschnitt
- 3: erste Leitung, leakage-Kabel
- 4: Sendereinheit
- 5: Empfängereinheit
- 6: erster Koppler, 3 dB-Koppler
- 7: zweite Leitung für Sender, 7' zweite Leitung für Empfänger, Lichtwellenleiter
- 8: zweiter Koppler, optischer Koppler
- 9: Breitbandverstärker
- 10: Eintaktverstärkern
- 11: elektro-optischer Wandler
- 12: zweite Kopfeinheit
- 13: Direktleitung zwischen erster und zweiter Kopfeinheit
- 14: Antenne der Kopfeinheit

## Patentansprüche

1. Kommunikationssystem zur Versorgung eines Gebietes mit eingeschränkten Empfangsmöglichkeiten mit Funkdiensten mit
wenigstens einer Kopfeinheit (1), die an einem Randpunkt des Gebietes angeordnet ist,
mehreren Repeatereinheiten (2) in dem Gebiet zum Senden / Empfangen von Funkdienstsignalen, die untereinander und mit der Kopfeinheit (1) über jeweils wenigstens eine Leitung (3) verbunden sind,
**dadurch gekennzeichnet, dass**
jede der mehreren Repeatereinheiten (2) entweder eine Sendereinheit (4) oder eine Empfängereinheit (5) für die Funkdienstsignale umfasst und
die Repeatereinheiten (2) so angeordnet sind, dass entlang einer Strecke in dem Gebiet Sendereinheiten (4) und Empfängereinheiten (5) alternierend aufeinander folgen.

2. Kommunikationssystem nach Anspruch 1, **dadurch gekennzeichnet, dass** die mehreren Repeatereinheiten (2) untereinander und mit der wenigstens einen Kopfeinheit (1) zusätzlich über eine zweite Leitung (7, 7') und einen zweiten Koppler (8) verbunden sind.

3. Kommunikationssystem nach Anspruch 2, **dadurch gekennzeichnet, dass** die erste Leitung (3) ein Leckkabel ist und der erste Koppler (6) ein 3 bzw. 6 dB-Koppler ist.

4. Kommunikationssystem nach Anspruch 2 oder 3, **dadurch gekennzeichnet, dass** die zweite Leitung (7, 7') eine Glasfaser ist.

5. Kommunikationssystem nach einem der vorangehenden Ansprüche, **dadurch gekennzeichnet, dass** eine zweite Kopfeinheit (12) an dem der ersten Kopfeinheit (1) gegenüberliegenden Ende der Strecke mit mehreren Repeatereinheiten (2) vorgesehen ist.

6. Kommunikationssystem nach Anspruch 5, **dadurch gekennzeichnet, dass** die zweite Kopfeinheit (12) mit der ersten Kopfeinheit (1) über eine Direktleitung (13) verbunden ist.

7. Kommunikationssystem nach Anspruch 5 oder 6, **dadurch gekennzeichnet, dass** nur eine der zwei Kopfeinheiten (1, 12) einen Funkempfänger umfasst.

## Claims

1. Communication system for supplying an area having restricted reception capacities with radio services, with
at least one master unit (1), which is disposed at a boundary point of the area,
a plurality of repeater units (2) in the area for transmitting / receiving radio service signals, which units are connected together and to the master unit (1) via at least one line (3) in each case,
**characterised in that**
each of the plurality of repeater units (2) comprises either a transmitter unit (4) or a receiver unit (5) for the radio service signals, and
the repeater units (2) are disposed such that transmitter units (4) and receiver units (5) follow one another alternately along a route in the area.

2. Communication system according to Claim 1, **characterised in that** the plurality of repeater units (2) are additionally connected together and to the at least one master unit (1) via a second line (7, 7') and a second coupler (8).

3. Communication system according to Claim 2, **characterised in that** the first line (3) is a leakage cable and the first coupler (6) is a 3 or 6 dB coupler.

4. Communication system according to Claim 2 or 3, **characterised in that** the second line (7, 7') is a glass fibre.

5. Communication system according to any one of the preceding Claims, **characterised in that** a second master unit (12) is provided at the end of the route with a plurality of repeater units (2) which lies opposite the first master unit (1).

6. Communication system according to Claim 5, **characterised in that** the second master unit (12) is connected to the first master unit (1) via a direct line (13).

7. Communication system according Claim 5 or 6, **characterised in that** just one of the two master units (1, 12) comprises a radio receiver.

## Revendications

1. Système de communication pour pourvoir en services radio une zone à possibilités de réception restreintes avec
au moins une unité de tête (1) qui est disposée en un point au bord de la zone,
plusieurs unités de répétiteurs (2) dans la zone pour l'émission / la réception de signaux de services radio qui sont reliées chacune entre elles et à l'unité de tête (1) par au moins une ligne (3),
**caractérisé en ce que**
chacune des plusieurs unités de répétiteurs (2) comprend soit une unité émettrice (4), soit une unité réceptrice (5) pour les signaux des services radio et **en ce que**
les unités de répétiteurs (2) sont disposées de telle sorte que, le long d'un tronçon dans la zone, des unités émettrices (4) et des unités réceptrices (5) se succèdent alternativement les unes les autres.

2. Système de communication selon la revendication 1, **caractérisé en ce que** les plusieurs unités de répétiteurs (2) sont reliées en plus entre elles et à l'une au moins unité de tête (1) par l'intermédiaire d'une deuxième ligne (7, 7') et d'un deuxième coupleur (8).

3. Système de communication selon la revendication 2, **caractérisé en ce que** la première ligne (3) est un câble de fuite et **en ce que** le premier coupleur (6) est un coupleur à 3, respectivement à 6 dB.

4. Système de communication selon la revendication 2 ou 3, **caractérisé en ce que** la deuxième ligne (7, 7') est une fibre optique.

5. Système de communication selon l'une des revendications précédentes, **caractérisé en ce qu'**une deuxième unité de tête (12) à l'extrémité du tronçon opposée à la première unité de tête (1) est prévue avec plusieurs unités de répétiteurs (2).

6. Système de communication selon la revendication 5, **caractérisé en ce que** la deuxième unité de tête (12) est reliée à la première unité de tête (1) par une ligne directe (13).

7. Système de communication selon la revendication 5 ou 6, **caractérisé en ce qu'**une seule des deux unités de tête (1, 12) comporte un récepteur radio.
